Europäisches Patentamt

European Patent Office

Office européen des brevets

(19)

(11) Veröffentlichungsnummer: **0 297 090**
**A1**

(12) **EUROPÄISCHE PATENTANMELDUNG**

(21) Anmeldenummer: **88890167.5**

(22) Anmeldetag: **24.06.88**

(51) Int. Cl.⁴: **C 01 B 13/10**
**C 01 B 13/02**

(30) Priorität: **25.06.87 AT 1615/87**

(43) Veröffentlichungstag der Anmeldung:
**28.12.88 Patentblatt 88/52**

(84) Benannte Vertragsstaaten: **AT DE FR GB SE**

(71) Anmelder: **VOEST-ALPINE INDUSTRIEANLAGENBAU GESELLSCHAFT M.B.H.**
**Turmstrasse 44**
**A-4020 Linz (AT)**

(72) Erfinder: **Wawrina, Rainer**
**Leitergraben 39**
**A-4060 Leonding (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) **Verfahren zur Herstellung von Reinsauerstoff für eine nachfolgende Herstellung von Ozon.**

(57) Bei einem Verfahren zur Herstellung von Reinsauerstoff für eine nachfolgende Herstellung von Ozon für Oxidationsverfahren, insbesondere für Bleich- und/oder Desinfektionszwecke, wird Luft verdichtet und in Sauerstoff und Stickstoff zerlegt und der abgetrennte Sauerstoff einem Ozonisator (3) zugeführt. Der das Oxidationsverfahren, insbesondere eine Bleich- und/oder Desinfektionseinrichtung (6) verlassende unreine Sauerstoff wird vorzugsweise unter Druck abgezogen und einer Reinigung unter Verwendung von Molekularsieben (11, 32,33) unterworfen. Die Molekularsiebe werden durch Druckwechsel (2) oder thermische Desorption (32,33) gereinigt bzw. regeneriert, worauf der gereinigte Sauerstoff dem Ozonisator (3) rückgeführt wird.

FIG. 1

LUFT

EP 0 297 090 A1

Beschreibung

## Verfahren zur Herstellung von Reinsauerstoff für eine nachfolgende Herstellung von Ozon

Die Erfindung bezieht sich auf ein Verfahren zur Herstellung von Reinsauerstoff für eine nachfolgende Herstellung von Ozon für Oxidationsverfahren, insbesondere für Bleich- und/oder Desinfektionszwecke, bei welcher Luft verdichtet und in Sauerstoff und Stickstoff zerlegt wird und der abgetrennte Sauerstoff einem Ozonisator zugeführt wird.

Insbesondere in der Papierindustrie sind große Mengen an Bleichmittel erforderlich und es ist hiefür eine Reihe von unterschiedlichen bleichenden Substanzen bekannt geworden. Ein Großteil der üblicherweise verwendeten Bleichmittel stellt nach der Verwendung eine bedeutende Umweltbelastung dar, so daß in jüngster Zeit häufig versucht wurde, umweltbelastende Bleichmittel durch andere Bleichmittel zu ersetzen. Ein besonders effizientes Bleichmittel ist beispielsweise Ozon. Ozon ist ein hochgiftiges Gas, welches zumeist durch stille elektrische Entladung von Reinsauerstoff gebildet wird. Die hiefür erforderlichen Anlagen sind bekannt.

Bei Verwendung von Ozon als Bleichmittel kann der Bleichstufe bzw. Oxidationsstufe ein mehr oder minder verunreinigter Sauerstoff entnommen werden. Bei effizienter Gestaltung der Bleichstufe ist in dem abgezogenen Gas kein Ozon mehr enthalten, wobei hinzukommt, daß Ozon selbst äußerst unstabil ist und daher spontan in Sauerstoff zerfällt.

Für die Herstellung von Ozon ist trockenes, Sauerstoff enthaltendes Gas Voraussetzung und es ist bekannt, Sauerstoff durch Anwendung von Druckwechseladsorptionsverfahren zu erzeugen. Derartige Druckwechseladsorptionsanlagen erfordern hohe Antriebsleistungen und damit einen großen Energieaufwand. Im Vergleich zu kryogenen Verfahren sind sie aber insbesondere bei geringerem Bedarf an Reinsauerstoff eine wirtschaftliche Alternative.

Die Erfindung zielt nun darauf ab, ein Verfahren der eingangs genannten Art zu schaffen, welches mit möglichst geringer Antriebsleistung und möglichst geringem Energieverbrauch für die Luftzerlegung auskommt. Zur Lösung dieser Aufgabe wird erfindungsgemäß vorgeschlagen, daß der das Oxidationsverfahren, insbesondere eine Bleich- und/oder Desinfektionseinrichtung, verlassende unreine Sauerstoff, vorzugsweise unter Druck, abgezogen wird und einer an sich bekannten Reinigung unter Verwendung von Molekularsieben unterworfen wird, daß die Molekularsiebe durch Druckwechsel oder thermische Desorption gereinigt bzw. regeneriert werden und daß der gereinigte Sauerstoff dem Ozonisator rückgeführt wird. Dadurch, daß der das Oxidationsverfahren verlassende unreine Sauerstoff einer Reinigung unter Verwendung von Molekularsieben unterworfen wird, läßt sich der Energieaufwand für die Reindarstellung von Sauerstoff wesentlich herabsetzen, da dieser das Bleichverfahren bzw. Oxidationsverfahren verlassende Sauerstoff einen wesentlich höheren Anreicherungsgrad an Sauerstoff aufweist als die für die Sauerstoffzerlegung üblicherweise verwendete Luft. Das zusätzliche Reinigungsverfahren für dieses aus der Bleich- bzw. Oxidationsstufe abgezogene Gas kann daher weniger aufwendig gestaltet werden und es kann insbesondere im Zuge dieser zusätzlichen Reinigung mit relativ geringen Antriebsleistungen und geringem Energieverbrauch gearbeitet werden. Erfindungsgemäß kann somit ein Großteil des bereits zerlegten Sauerstoffes im Kreislauf geführt werden und die Molekularsiebe für die Reinigung dieses im Kreislauf geführten Gases können in besonders einfacher Weise durch Desorption gereinigt bzw. regeneriert werden, wofür ohne weiteres Luft verwendet werden kann. Das auf diese Weise zusätzlich eingebrachte Stickstoffvolumen, welches in Luft enthalten ist, ist relativ gering, so daß eine Beeinträchtigung der Ozonisatoren nicht befürchtet werden muß.

In besonders vorteilhafter Weise wird das erfindungsgemäße Verfahren so vorgenommen, daß die Reinigung des rückzuführenden Sauerstoffes durch Druckwechseladsorption der den abgezogenen Sauerstoff begleitenden Verunreinigungen an Molsieben vorgenommen wird. Die für die Druckwechseladsorption erforderlichen Verdichter erfordern lediglich geringe Antriebsleistung und in jedem Fall eine geringere Antriebsleistung als für die Zerlegung von Luft erforderlich wäre, um die gleiche Menge an Sauerstoff herzustellen. Für eine derartige Reinigung können die bestehenden Einrichtungen der Luftzerlegung herangezogen werden. Im Falle von in Druckwechselverfahren schwer desorbierbaren Verunreinigungen kann eine Reinigung an Molsieben mit nachfolgender thermischer Desorption erforderlich sein.

In besonders vorteilhafter Weise wird das erfindungsgemäße Verfahren so durchgeführt, daß die zur Regeneration der Molsiebe verwendete Luft über Wärmetauscher auf Temperaturen von wenigstens, 120°C, insbesondere auf 170 bis 260°C erwärmt wird. Eine derartige Vorwärmung der Luft führt zu einer besonders wirksamen Regeneration der Molsiebe und stellt gleichzeitig sicher, daß die Molsiebe nur geringe Adsorptionsaffinität für den Stickstoff der Luft zeigen. Die nachfolgende Verunreinigung beim erstmaligen neuerlichen Zuschalten von rückgeführtem und im Kreislauf geführtem Sauerstoff in den Ozonisatoren wird jedoch gering gehalten.

Um die Zeitintervalle, innerhalb welcher die Regeneration der Molsiebe erforderlich ist, möglichst lang zu halten, kann mit Vorteil so vorgegangen werden, daß der aus einer Zellstoffbleiche abgezogene verunreinigte Sauerstoff, insbesondere Drucksauerstoff, einer Vorreinigung, insbesondere einer Gegenstromwaschung unter gleichzeitiger Kühlung, zugeführt wird und anschließend über Molsiebe geführt wird. Die Gegenstromwaschung des Drucksauerstoffes eliminiert hiebei einen Großteil der den Druckwechseladsorber belastenden Verunreinigungen, wie insbesondere $CO_2$, so daß das wirksame Volumen der Adsorber für die Abtrennung weiterer Schadstoffe groß bleibt.

Nach der Regeneration der Molekularsiebe für die Reinigung des rückzuführenden Sauerstoffes mit Luft können die Molsiebe der Druckwechseladsorber mit Reinsauerstoff auf Betriebsdruck gebracht werden , um auf diese Weise verbleibende Luftmengen auszutreiben. Auch durch diese Maßnahme wird die nachfolgende Belastung des Ozonisators wesentlich herabgesetzt.

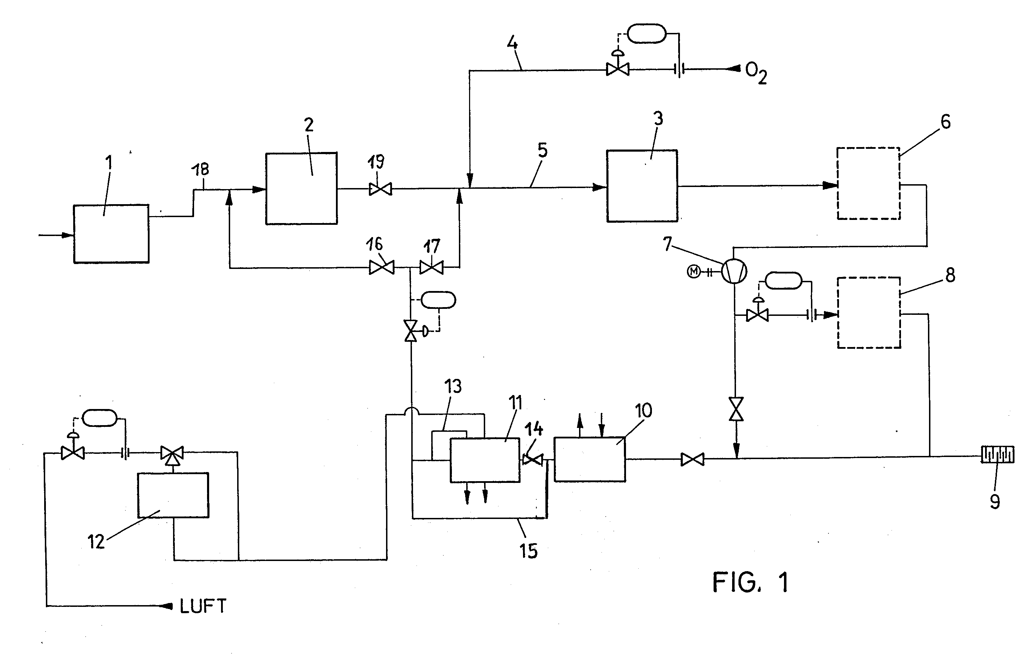

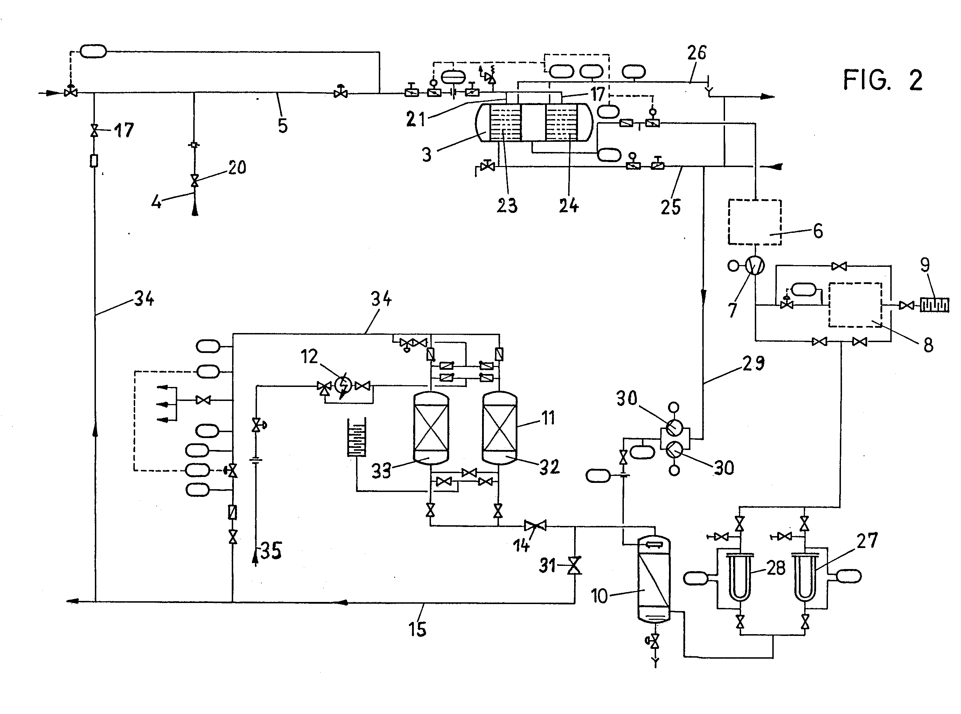

Die Erfindung wird nachfolgend an Hand eines in der Zeichnung schematisch dargestellten Ausführungsbeispieles näher erläutert. In dieser zeigt Fig.1 ein Blockschema des erfindungsgemäßen Verfahrens und Fig.2 einen Ausschnitt aus dem Prozeßdiagramm, in welchem insbesondere die Gasrückführung bzw. -reinigung nach den Bleichstufen gezeigt ist.

Bei Durchführung des Verfahrens nach dem Blockschema entsprechend der Fig.1 wird in einem Luftverdichter 1 angesaugte Umgebungsluft auf den in der Druckwechseladsorptionsanlage 2 benötigten Verfahrensdruck verdichtet und anschließend der zyklisch arbeitenden Druckwechseladsorptionsanlage 2 zugeführt. Die mit sehr kurzen Zykluszeiten arbeitende Anlage 2 ist so dimensioniert, daß sie nur etwa halb so viel gereinigten Sauerstoff pro Stunde liefern kann, wie im nachfolgenden Ozongenerator 3 benötigt wird. Zum Anfahren des Ozongenerators 3 und damit zum Starten des Verfahrens wird daher über Leitung 4 zusätzlich Reinsauerstoff in die Sauerstoffzuführungsleitung 5 eingespeist. Das im Ozongenerator 3 hergestellte Gemisch aus Sauerstoff und etwa 7 % Ozon wird der Ozonbleichstufe 6 zugeführt. Der aus dieser Ozonbleichstufe 6 abziehende verunreinigte Sauerstoff wird über einen Wasserringkompressor 7 nachverdichtet, ein geringer Teil des Gases wird der Sauerstoffbleichstufe 8 zugeführt und anschließend teilweise wieder mit dem nicht über die Sauerstoffbleichstufe 8 geführten, größeren Anteil des verunreinigten Sauerstoffes vereinigt. Ein geringer Teil des verunreinigten Sauerstoffes wird über den Schalldämpfer 9 in die Atmosphäre abgelassen.

Zur Reinigung wird das Abgas erst im Wäscher 10 gewaschen und anschließend zur Entfernung von Wasser, und Rest-$CO_2$ über ein Molekularsieb 11 geführt. Am Austritt der Sauerstoffreinigungsanlage 11 werden etwa 60 % des ursprünglich in den Ozongenerator eingespeisten reinen Sauerstoffes wiedergewonnen, der wiederum in Leitung 5 eingespeist wird und somit neuerlich zur Erzeugung von Ozon zur Verfügung steht.

Das Molekularsieb 11 wird zur Regenerierung mit Luft, die im Wärmetauscher 12 erhitzt und getrocknet, wurde beaufschlagt und anschließend mit bereits gereinigtem Sauerstoff, der über die Leitung 13 im Kreislauf geführt wird, gespült.

Alternativ kann das Verfahren auch so geführt werden, daß die Sauerstoffnachreinigung 11 nach Schließen der Ventile 14 und 17 über die Bypassleitung 15 umfahren wird der verunreinigte Sauerstoff über das geöffnete Ventil 16 in die Rohgaszuführungsleitung 18 eingespeist, zusammen mit dem Rohgas in der Druckwechseladsorptionsanlage 2 in Sauerstoff und Verunreinigungen zerlegt und der gewonnene Reinsauerstoff über das geöffnete Ventil 19 dem Ozonisator 3 zugeführt wird. Allerdings muß bei dieser Verfahrensführung die Druckwechseladsorptionsanlage 2 so dimensioniert sein, daß sie den gesamten vom Ozongenerator pro Stunde benötigten Sauerstoff liefern kann.

Das Prozeßdiagramm nach Fig.2 zeigt die für das Verfahren notwendige Anlage mit Ausnahme der Reinsauerstoff liefernden Druckwechseladsorptionsanlage 2

Zum Starten des Ozongenerators 3 wird auch hier über Leitung 4, zusätzlich zu dem von der Druckwechseladsorptionsanlage produzierten Sauerstoff, Reinsauerstoff in die Leitung 5 eingespeist. Wenn das Verfahren im Gleichgewicht ist, wird Ventil 20 geschlossen und die Leitung 4 von dem Sauerstoff/Ozonkreislauf abgetrennt.

Der Sauerstoff wird anschließend über zwei getrennte Einspeisungen 21, 22 den zwei voneinander getrennten Elektroden-Röhrenkesseln 23, 24 des Ozongenerators 3 zugeführt. Die zylindrischen Elektroden des Ozongenerators müssen während des Betriebes mit Wasser gekühlt werden, wobei in der Fig. die Wasserzuleitung mit 25 und die Wasserableitung mit 26 bezeichnet ist. Das vom Ozongenerator erzeugte Gemisch aus Ozon und Sauerstoff wird anschließend über die Ozonbleichstufe 6 geführt und der diese verlassende Strom an verunreinigtem Sauerstoff durch den Sauerstoffverdichter 7 komprimiert und anschließend teilweise über die Sauerstoffbleichstufe 8 geführt. Der aus der Sauerstoffbleichstufe 8 austretende verunreinigte Sauerstoff wird über den Schalldämpfer 9 abgelassen und abweichend von der Ausführung nach Fig.1 wird nur der nicht durch die Sauerstoffbleichstufe 8 geführte verunreinigte Sauerstoff der Wiederaufbereitung zugeführt.

Zur Wiederaufbereitung wird der Sauerstoff erst über zwei parallel geschaltete Sauerstoffilter 27, 28 geführt, in welchen vor allem Zellstoffpartikel entfernt werden. Anschließend wird der Sauerstoff über den Wäscher 10 geleitet. Die Wasserzuführung zum Wäscher 10 ist eine Zweigleitung 29 der Kühlwasserleitung 25, wobei in dieser Leitung 29 mindestens eine Kühlwasserpumpe 30 vorgesehen ist.

Der den Wäscher 10 verlassende vorgereinigte Sauerstoff wird entweder über Leitung 15 bei geschlossenem Ventil 14 und geöffnetem Ventil 31 der hier nicht gezeigten Druckwechseladsorptionsanlage 2 zugeführt oder bei geöffnetem Ventil 14 und geschlossenen Ventilen 31 und 17 zur Abtrennung von Feuchtigkeit, noch vorhandenem Kohlendioxid über die Sauerstoffnachreinigungsanlage 11 geleitet. Die Sauerstoffnachreinigungsanlage 11 besteht im wesentlichen aus zwei parallel geschalteten Adsorbern 32 und 33, die jeweils mit für die adsorbierenden Gase geeigneten Molekularsieben befüllt sind. Am Kopf der beiden Adsorber 32 und 33 wird Sauerstoff gewonnen, der über Leitung 34 in die Reinsauerstoffleitung 5 eingespeist wird und somit neuerlich zur Ozonherstellung im Ozongenerator 3 zur Verfügung steht.

Zur Regenerierung der Molsiebbehälter 32 und 33 wird bei 35 Umgebungsluft angesaugt, die im Wärmetauscher 12 vorgewärmt und getrocknet wird.

Um eine Stickstoffauffaufkonzentration des zirkulierenden Gases zu vermeiden, werden die Adsorber anschließend noch mit im Kreislauf geführtem Reinsauerstoff gespült.

Durch die Möglichkeit, den größten Teil des im Verfahren benötigten Sauerstoffes im Kreislauf zu führen, kann das Verfahren mit einem Minimum an Energieaufwand geführt werden.

## Patentansprüche

1. Verfahren zur Herstellung von Reinsauerstoff für eine nachfolgende Herstellung von Ozon für Oxidationsverfahren, insbesondere für Bleich- und/oder Desinfektionszwecke, bei welcher Luft verdichtet und in Sauerstoff und Stickstoff zerlegt wird und der abgetrennte Sauerstoff einem Ozonisator (3) zugeführt wird, dadurch gekennzeichnet, daß der das Oxidationsverfahren, insbesondere eine Bleich- und/oder Desinfektionseinrichtung (6), verlassende unreine Sauerstoff, vorzugsweise unter Druck, abgezogen wird und einer an sich bekannten Reinigung unter Verwendung von Molekularsieben (11,32,33) unterworfen wird, daß die Molekularsiebe (11,32,33) durch Druckwechsel oder thermische Desorption gereinigt bzw. regeneriert werden und daß der gereinigte Sauerstoff dem Ozonisator (3) rückgeführt wird.

2. Verfahren nach Anspruch 1, dadurch gekennzeichnet, daß die Reinigung des rückzuführenden Sauerstoffes durch Druckwechseladsorption (2) der den abgezogenen Sauerstoff begleitenden Verunreinigungen an Molsieben (11) vorgenommen wird.

3. Verfahren nach Anspruch 1 oder 2, dadurch gekennzeichnet, daß die zur Regeneration der Molsiebe (11,32,33) verwendete Luft über Wärmetauscher (12) auf Temperaturen von wenigstens 120°C, insbesondere auf 170 bis 260°C erwärmt wird.

4. Verfahren nach einem der Ansprüche 1 bis 3, dadurch gekennzeichnet, daß der aus einer Zellstoffbleiche (6) abgezogene verunreinigte Sauerstoff, insbesondere Drucksauerstoff, einer Vorreinigung, insbesondere einer Gegenstromwaschung (10) unter gleichzeitiger Kühlung, zugeführt wird und anschließend über Molsiebe (11,32,33) geführt wird.

5. Verfahren nach einem der Ansprüche 1 bis 4, dadurch gekennzeichnet, daß nach der Regeneration der Molekularsiebe (32,33) für die Reinigung des rückzuführenden Sauerstoffes mittels Luft die Molsiebe (32,33) mit Sauerstoff auf Betriebsdruck gebracht werden.

0297090

FIG. 1

O₂

LUFT

1 2 3 4 5 6 7 8 9 10 11 12 13 14 15 16 17 18 19

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 5, Nr. 24 (C-43)[696], 13. Februar 1981; & JP-A-55 149 106 (MITSUBISHI DENKI K.K.) 20-11-1980 * Insgesamt * --- | 1,2 | C 01 B 13/10 C 01 B 13/02 |
| X | DE-A-3 632 937 (BBC BROWN BOVERI AG) * Ansprüche; Figur 1 * --- | 1,2,4 | |
| A | FR-A-2 443 875 (LINDE AG) * Anspruche 1; Figur 1 * --- | 1 | |
| A | LINDE BERICHTE AUS TECHNIK UND WISSENSCHAFT, Nr. 49, Juli 1981, Seiten 9-13, Linde AG, Wiesbaden, DE; E. LASSMANN et al.: "Wirtschaftliche Ozonerzeugung aus Sauerstoff durch die Linde-Druckwechseladsorptionsanlage" * Insgesamt * ----- | 1-5 | |

RECHERCHIERTE SACHGEBIETE (Int. Cl.4)

C 01 B

Der vorliegende Recherchenbericht wurde für alle Patentansprüche erstellt

| Recherchenort | Abschlußdatum der Recherche | Prüfer |
|---|---|---|
| DEN HAAG | 29-08-1988 | MINI A.E. |